Europäisches Patentamt

European Patent Office

Office européen des brevets

(11) Veröffentlichungsnummer: **0 477 506 A2**

# EUROPÄISCHE PATENTANMELDUNG

(21) Anmeldenummer: **91113103.5**

(51) Int. Cl.5: **F16F 9/06**

(22) Anmeldetag: **03.08.91**

(30) Priorität: **22.09.90 DE 4030035**

(43) Veröffentlichungstag der Anmeldung:
**01.04.92 Patentblatt 92/14**

(84) Benannte Vertragsstaaten:
**DE ES FR GB IT SE**

(71) Anmelder: **Bayerische Motoren Werke Aktiengesellschaft Patentabteilung AJ-3 Postfach 40 02 40 Petuelring 130**
**W-8000 München 40(DE)**

(72) Erfinder: **Bonenberger, Hartmut**
**Winterstrasse 39**
**W-8039 Puchheim-Nord(DE)**
Erfinder: **Wagner, Kurt**
**Eschenrieder Strasse 1**
**W-8038 Gröbenzell(DE)**
Erfinder: **Kirchner, Holger**
**Bergstrasse 13**
**W-5207 Ruppichteroth-Schönenberg(DE)**

(54) **Pralldämpfer.**

(57) Pralldämpfer mit zwei ineinander schieblichen Rohren (1,15) für Kraftfahrzeuge, bestehend aus einem ersten und zweiten Flüssigkeitsraum (6 bzw.11) und einem vom Flüssigkeitsraum (6) durch einen Trennkolben (4) abgetrennten Gasraum (3). Ein hinter dem Arbeitskolben (12) angeordneter dritter Flüssigkeitsraum (14) kann durch Druckerhöhung die ineinander schieblichen Rohre (1,15) verkürzen oder verlängern.

Fig 1

Die Erfindung bezieht sich auf einen Pralldämpfer mit zwei ineinander schieblichen Rohren, insbesondere für Kraftfahrzeuge, zum Abbremsen eines auf ein Hindernis prallenden Fahrzeuges durch hydraulische Dämpfungskräfte und Gasfederkräfte, bei dem ein durch einen Boden abgeschlossenes Innenrohr vom Boden angefangen hintereinander einen ein Gaspolster von hohem Druck aufnehmenden Gasraum, einen in dem Innenrohr dicht und verschieblich geführten Trennkolben, einen ersten Flüssigkeitsraum, eine in dem Innenrohr festgelegte und mit Drosselöffnungen versehene Zwischenwand, einen zweiten Flüssigkeitsraum und einen Arbeitskolben aufweist.

Es sind Pralldämpfer dieser Art bekannt (z.B. DE-PS 34 19 165), bei denen zwei ineinander verschiebbare Rohre verwendet werden, wobei ein abgeschlossenes Innenrohr vom Boden angefangen hintereinander einen ein Gaspolster von hohem Druck aufnehmenden Gasraum, einen in dem Innenrohr dicht und verschieblich geführten Trennkolben und einen ersten Flüssigkeitsraum aufweist. Der erste Flüssigkeitsraum ist über ein Drosselstelle mit einem zweiten Flüssigkeitsraum verbunden und dient zur Erzeugung von hydraulischen Dämpfungskräften. In dieser Normalstellung ist der maximale Hub groß genug, um einen Aufprall bis 8 km/h absorbieren zu können. Der Volumenausgleich und das Rückfedern des Pralldämpfers in die Grundposition erfolgt über das Gaspolster, das im geschlossenen Gasraum eingeschlossen ist.

Aufgabe der Erfindung ist es, einen Pralldämpfer so weiterzubilden, daß ausgehend von der Grundposition eine axiale Verlängerung der ineinander schieblichen Rohre unter bestimmten vorgegebenen Kriterien möglich ist, wobei sowohl in der Grundposition als auch in der ausgefahrenen Position die gewünschte Dämpfung und Deformierbarkeit des Behälters erreicht werden kann.

Zur Lösung dieser Aufgabe ist erfindungsgemäß vorgesehen, daß auf der dem zweiten Flüssigkeitsraum entgegengesetzten Seite des Arbeitskolbens ein dritter Flüssigkeitsraum, einen mit Flüssigkeit gefüllten Ausgleichsraum und eine, vom Ausgleichsraum durch einen Trennkolben getrennte Kammer vorgesehen ist, die über eine Steuerung mit Druck beaufschlagbar ist und die ausgehend von einem Anfangsdruck und einer Grundposition bei Druckerhöhung den Trennkolben und damit das Außenrohr gegenüber dem Innenrohr über die Flüssigkeit in den Ausgleichsraum um einen definierten axialen Weg auseinanderschiebt, so daß zwischen einem zweiten, mit einer axial verschiebbaren Kolbenstange verbundenen Kolben und dem Arbeitskolben ein weiterer Flüssigkeitsraum entsteht, in dem Flüssigkeit aus dem dritten Flüssigkeitsraum und dem Ausgleichsraum über eine Strömungsverbindung fließt.

Vorteilhaft ist hierbei, daß über die Steuerung der Ausgleichsraum eine Druckerhöhung erfährt, so daß der Pralldämpfer aus der Normalstellung in eine ausgefahrene Stellung z.B. 100 mm Verlängerung gebracht werden kann, und bei Nichtbedarf durch Druckablassen in Form einer Umschaltung in die zweite Kammer zurück in die Grundposition gefahren werden kann. Die Dämpfung ist dabei sowohl in der Grundposition als auch in der ausgefahrenen Stellung nahezu gleich, wobei in vorteilhafter Weise ein zusätzlicher Hub die Leistungsfähigkeit des Pralldämpfers erhöht. Der maximale Pralldämpferhub wird auf ein derartiges Maß vergrößert, das es erlaubt, die Energien die bei einem Aufprall von z.B. 15 km/h auftreten zu absorbieren.

Nach einem weiteren wesentlichen Merkmal weist die Strömungsverbindung ein Dämpfungsventil oder eine Drosselöffnung auf.

Nach einem weiteren wesentlichen Merkmal ist vorgesehen, daß zwischen der Außenfläche des Innenrohres und der Innenfläche des Außenrohres zwei ringförmige, abgedichtete Kammern vorgesehen sind, die über die Steuerung mit einem Steuermedium beaufschlagt werden. Dabei läßt sich mit Vorteil als Steuermedium ein flüssiges oder gasförmiges Medium verwenden.

Eine wesentliche Ausführungsform sieht vor, daß die Abdichtung zwischen den Kammern fest am Rohr, die Abdichtungen fest am Rohr und die Abdichtung gegenüber dem Außenrohr verschiebbar sind. Hierbei wird durch eine außen liegende Steuerung jeweils die eine oder die andere Kammer mit Steuermedium beaufschlagt, so daß die ineinander schieblichen Rohre sich entweder verlängern oder je nach Stellung der Steuerung verkürzen.

In Ausgestaltung der Erfindung sind der dritte und weitere Flüssigkeitsraum im Laufbereich des Kolbens durch Nuten in der Wandung des Innenrohres miteinander verbunden sind.

Ein bevorzugtes Ausführungsbeispiel der Erfindung ist in der Zeichnung schematisch dargestellt.

Es zeigt:

Figur 1 eine Ausführungsform eines Pralldämpfers im Schnitt, bei dem eine außen liegende Steuerung verwendet wird

Figur 2 eine Ausführungsform mit Nuten im Innenrohr.

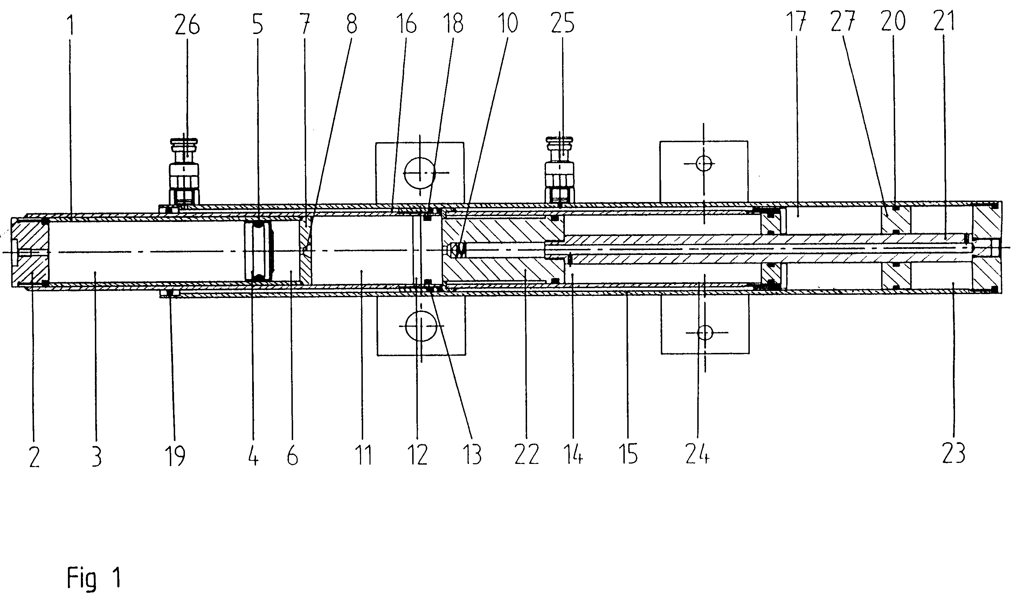

Der in Figur 1 dargestellte Pralldämpfer weist ein durch einen Boden 2 abgeschlossenes Innenrohr 1 auf. Vom Boden 2 ausgehend ist hintereinander ein ein Gaspolster von hohem Druck aufnehmender Gasraum 3, ein in dem Innenrohr 1 mittels eines Dichtringes 5 dicht und verschieblich geführter Trennkolben 4, ein erster Flüssigkeitsraum 6, eine in dem Innenrohr 1 mit einer Drosselöffnung 8 versehene Zwischenwand 7 vorgesehen. Der zweite Flüssigkeitsraum 11 ist durch einen Arbeitskolben 12 in dem Innenrohr 1 gegenüber dem Innenmantel des Innenrohres 1 durch einen Dichtring 13 abgedichtet.

Auf der dem zweiten Flüssigkeitsraum 11 entgegengesetzten Seite des Arbeitskolbens 12 ist ein dritter Flüssigkeitsraum 14 angeordnet.

Dieses Ausführungsbeispiel eines Pralldämpfers zeigt weiter, daß auf der Außenfläche des Innenrohres 1 und der Innenfläche des Außenrohres 15 die Kammern 16 und 17 gebildet werden. Die Abdichtung 18 ist am Rohr 1 fest angeordnet, während die Abdichtung 19 an der Innenfläche des Außenrohres fest angeordnet ist.

über ein Steuerventil läßt sich entweder in die Kammer 16 oder in die Kammer 17 ein Steuermedium einbringen, so daß das Außenrohr 15 je nach Druckbeaufschlagung in die Grundposition oder die ausgefahrene Stellung gebracht wird. Bei Druckerhöhung in der Kammer 17 wird das Medium im dritten Flüssigkeitsraum 14 durch eine Drosselöffnung in den entstehenden vierten Flüssigkeitsraum gedrängt, das fehlende Kolbenstangenvolumen aus dem Ausgleichsraum 23 ersetzt und das Außenrohr 15 in die gewünschte Position geschoben.

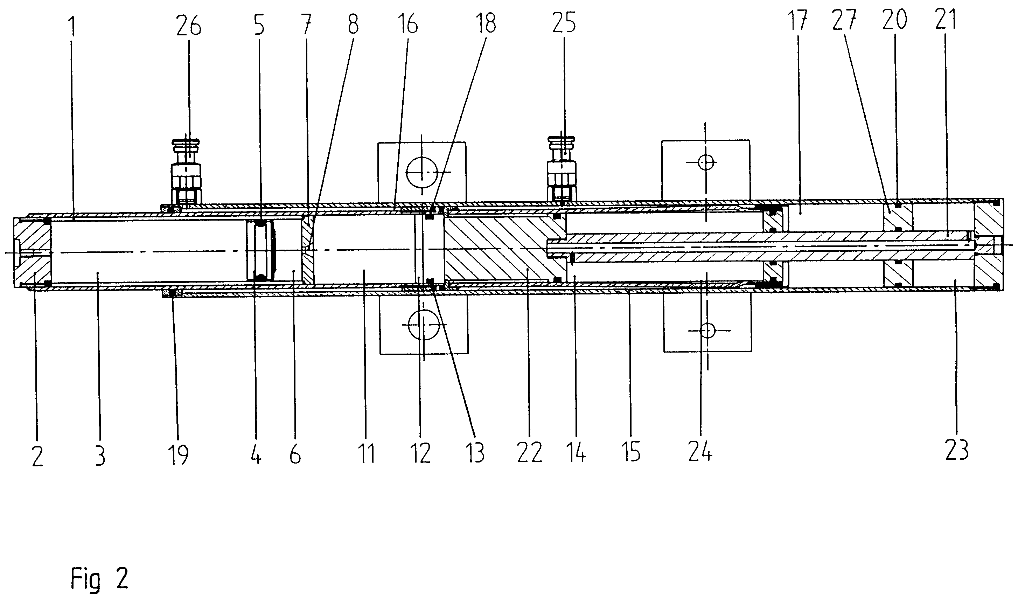

In der Figur 2 sind im Innenrohr 1 Nuten 24 vorgesehen, die die in Figur 1 dargestellte Strömungsverbindung 10 ersetzen. Sobald sich das Außenrohr 15 zusammen mit der Kolbenstange 21 und dem Kolben 22 verschiebt, gelangt die Flüssigkeit aus dem dritten Flüssigkeitsraum 14 und dem Ausgleichsraum 23 über den dritten Flüssigkeitsraum 14 und den Nuten 24 in den entstehenden weiteren Flüssigkeitsraum zwischen dem Arbeitskolben 12 und dem Kolben 22. Zur einwandfreien Funktion verlaufen die Nuten 24 bis in den Bereich des Kolbens 22.

**Patentansprüche**

1. Pralldämpfer mit zwei ineinander schieblichen Rohren, insbesondere für Kraftfahrzeuge, zum Abbremsen eines auf ein Hindernis prallenden Fahrzeuges durch hydraulische Dämpfungskräfte und Gasfederkräfte, bei dem ein durch einen Boden abgeschlossenes Innenrohr vom Boden angefangen hintereinander einen ein Gaspolster von hohem Druck aufnehmenden Gasraum, einen in dem Innenrohr dicht und verschieblich geführten Trennkolben, einen ersten Flüssigkeitsraum, eine in dem Innenrohr festgelegte und mit Drosselöffnungen versehene Zwischenwand, einen zweiten Flüssigkeitsraum und einen Arbeitskolben aufweist,
dadurch gekennzeichnet,
daß auf der dem zweiten Flüssigkeitsraum (11) entgegengesetzten Seite des Arbeitskolbens (12) ein dritter Flüssigkeitsraum (14), einen mit Flüssigkeit gefüllten Ausgleichsraum (23) und eine, vom Ausgleichsraum (23) durch einen Trennkolben (25) getrennte Kammer (17) vorgesehen ist, die über eine Steuerung mit Druck beaufschlagbar ist und die ausgehend von einem Anfangsdruck und einer Grundposition bei Druckerhöhung den Trennkolben (27) und damit das Außenrohr (15) gegenüber dem Innenrohr (1) über die Flüssigkeit in den Ausgleichsraum (23) um einen definierten axialen Weg auseinanderschiebt, so daß zwischen einem zweiten, mit einer axial verschiebbaren Kolbenstange (21) verbundenen Kolben (22) und dem Arbeitskolben (12) ein weiterer Flüssigkeitsraum entsteht, in dem Flüssigkeit aus dem dritten Flüssigkeitsraum (14) und dem Ausgleichsraum (23) über eine Strömungsverbindung (10) fließt.

2. Pralldämpfer nach Anspruch 1,
dadurch gekennzeichnet,
daß die Strömungsverbindung (10) ein Dämpfungsventil (9) oder eine Drosselöffnung aufweist.

3. Pralldämpfer nach Anspruch 1,
dadurch gekennzeichnet,
daß zwischen der Außenfläche des Innenrohres (1) und der Innenfläche des Außenrohres (15) zwei ringförmige, abgedichtete Kammern (16, 17) vorgesehen sind, die über die Steuerung mit einem Steuermedium beaufschlagt werden.

4. Pralldämpfer nach Anspruch 3,
dadurch gekennzeichnet,
daß als Steuermedium ein flüssiges oder gasförmiges Medium verwendet wird.

5. Pralldämpfer nach Anspruch 3,
dadurch gekennzeichnet,
daß die Abdichtung (10) zwischen den Kammern (16, 17) fest am Rohr (1), die Abdichtungen (19) fest am Rohr (15) und die Abdichtung (20) gegenüber dem Außenrohr (15) verschiebbar sind.

6. Pralldämpfer nach Anspruch 1,
dadurch gekennzeichnet,
daß der dritte (14) und weitere Flüssigkeitsraum im Laufbereich des Kolbens (22) durch Nuten (24) in der Wandung des Innenrohres (1) miteinander verbunden sind.

Fig 1

Fig 2

EP 0 477 506 A2